(19) Europäisches Patentamt
European Patent Office
Office européen des brevets

(11) Veröffentlichungsnummer: **0 531 835 A1**

(12) **EUROPÄISCHE PATENTANMELDUNG**

(21) Anmeldenummer: **92114802.9**

(22) Anmeldetag: **29.08.92**

(51) Int. Cl.[5]: **C08F 4/685**, C08F 4/647, C08F 10/06

(30) Priorität: **13.09.91 DE 4130426**

(43) Veröffentlichungstag der Anmeldung: **17.03.93 Patentblatt 93/11**

(84) Benannte Vertragsstaaten: **BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Koelle, Peter, Dr.**
**An der Froschlache 19**
**W-6700 Ludwigshafen(DE)**
Erfinder: **Mueller, Patrik, Dr.**
**Johanniskreuzer Strasse 67**
**W-6750 Kaiserslautern(DE)**
Erfinder: **Schwager, Harald, Dr.**
**Ziegelofenweg 7**
**W-6720 Speyer(DE)**
Erfinder: **Hungenberg, Klaus-Dieter, Dr.**
**Ortsstrasse 135**
**W-6943 Birkenau(DE)**

# (54) Zweizentrige Katalysatorsysteme zur Polymerisation von Propylen.

(57) Zweizentrige Katalysatorsysteme zur Polymerisation von Propylen auf der Basis

a) einer Feststoffkomponente, enthaltend eine Verbindung des drei- oder vierwertigen Titans und eine Verbindung des drei-, vier- oder fünfwertigen Vanadiums, einen feinteiligen Träger und ein Halogen,

b) einer Aluminiumkomponente und

c) einer Elektronendonorkomponente.

Die mit Hilfe der erfindungsgemäßen, zweizentrigen Katalysatorsysteme erhältlichen Polymerisate des Propylens zeichnen sich insbesondere durch eine breite Molmassenverteilung und eine leichte Verarbeitbarkeit aus.

EP 0 531 835 A1

Die vorliegende Erfindung betrifft neue, zweizentrige Katalysatorsysteme zur Polymerisation von Propylen auf der Basis

a) einer Feststoffkomponente, enthaltend eine Verbindung des drei- oder vierwertigen Titans und eine Verbindung des drei-, vier- oder fünfwertigen Vanadiums, einen feinteiligen Träger und ein Halogen,

b) einer Aluminiumkomponente und

c) einer Elektronendonorkomponente.

Außerdem betrifft die Erfindung Verfahren zur Herstellung der neuen Katalysatorsysteme, die Herstellung von Polymerisaten des Propylens mit Hilfe dieser Katalysatorsysteme und die hiernach erhältlichen Polymerisate.

Die Herstellung von Polymerisaten des Propylens durch Ziegler-Natta-Polymerisatenist bereits mehrfach beschrieben worden. Die dabei verwendeten Katalysatorkomponenten enthalten u.a. Verbindungen des mehrwertigen Titans, Aluminiumhalogenide und/oder Alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200, US-A 48 57 613). Mit Hilfe dieser Katalysatorsysteme, die als Katalysatorzentrum jeweils ein Titanatom aufweisen, sind Polyolefine erhältlich, die sich insbesondere durch eine relativ enge Molmassenverteilung auszeichnen. Unter der Molmassenverteilung eines Polymerisats versteht man dabei den Quotienten aus dem Gewichtsmittel der Molmasse ($\overline{M}_w$) und dem Zahlenmittel der Molmasse ($\overline{M}_n$). Polymerisate mit einer engen Molmassenverteilung können in der Regel starken mechanischen Belastungen ausgesetzt werden, ohne daß dabei die Struktur des Polymerisats deformiert wird, was jedoch meist mit einer schlechten Verarbeitbarkeit verbunden ist.

Weiterhin sind aus dem Stand der Technik Katalysatorsysteme zur Polymerisation von $C_2$-$C_{10}$-Alk-1-enen bekannt, bei denen anstelle einer drei- oder vierwertigen Titanverbindung eine drei- oder vierwertige Vanadiumverbindung, beispielsweise Vanadiumtrichlorid oder Vanadiumtetrachlorid als Übergangsmetallkomponente verwendet wird (GB-A 1 384 529). Als weitere Katalysatorbestandteile werden auch hier Aluminiumverbindungen eingesetzt. Derartige Katalysatorsysteme eignen sich insbesondere zur Polymerisation von Ethylen. In diesen Fällen sind Polyolefine erhältlich, die sich insbesondere durch eine verbesserte Kristallinität und durch eine relativ hohe mechanische Belastbarkeit auszeichnen, deren Verarbeitbarkeit jedoch häufig eingeschränkt ist, oder nur durch einen erheblichen verfahrenstechnischen Mehraufwand möglich ist.

Für eine ganze Reihe von Anwendungen spielen jedoch gute Verarbeitungseigenschaften eine erheblich größere Rolle als eine hohe mechanische Belastbarkeit, beispielsweise eine hohe Steifigkeit, da bei diesen Einsatzbereichen eine Verringerung des verfahrenstechnischen Aufwandes aus wirtschaftlichen Gründen für deren gewerbliche Anwendbarkeit entscheidend wird.

Der vorliegenden Erfindung lag daher die Aufgabe zugrunde, den geschilderten Nachteilen abzuhelfen und ein neues Katalysatorsystem zu entwickeln, mit dessen Hilfe Polymerisate des Propylens mit guten Verarbeitungseigenschaften ohne verfahrenstechnischen Mehraufwand hergestellt werden können.

Demgemäß wurden die eingangs definierten neuen Katalysatorsysteme gefunden.

Die erfindungsgemäßen Katalysatorsysteme enthalten u.a. eine Feststoffkomponente a), enthaltend eine Verbindung des drei- oder vierwertigen Titans und eine Verbindung des drei-, vier- oder fünfwertigen Vanadiums, ferner einen feinteiligen Träger und ein Halogen.

Als Verbindungen des drei- oder vierwertigen Titans werden dabei insbesondere Halogenide, Oxohalogenide oder Alkoholate des Titans verwendet, wobei die Chloride und Oxochloride des Titans, insbesondere Titantetrachlorid, bevorzugte sind. Auch bei der erfindungsgemäß ebenfalls einzusetzenden Verbindung des drei-, vier- oder fünfwertigen Vanadiums werden insbesondere Halogenide, Oxohalogenide oder Alkoholate verwendet. Bevorzugte Vertreter sind dabei Chloride und Oxochloride des Vanadiums, speziell Vanadiumtrichlorid, Vanadiumtetrachlorid, Vanadiumpentachlorid und Vanadiumoxotrichlorid. Die Metallatome dieser Verbindungen des drei- oder vierwertigen Titans bzw. des drei-, vier- oder fünfwertigen Vanadiums können jeweils als Zentrum des Katalysatorsystems angesehen werden, so daß die erfindungsgemäßen Katalysatorsysteme als zweizentrige Katalysatorsysteme bezeichnet werden können.

Weiterhin enthalten die erfindungsgemäßen Katalysatorsysteme einen feinteiligen Träger, wobei sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 $\mu$m, insbesondere von 1 bis 500 $\mu$m, ein Porenvolumen von 0,1 bis 10 $cm^3/g$, insbesondere von 1,0 bis 5,0 $cm^3/g$ und eine spezifische Oberfläche von 10 bis 1000 $m^2/g$, insbesondere von 100 bis 500 $m^2/g$ auf.

Das in den erfindungsgemäßen Katalysatorsystemen ebenfalls noch vorliegende Halogen kann entweder direkt, d.h. als Element oder aber in Form eines Halogenierungsmittels, beispielsweise als Halogenwasserstoffsäure, mit der Titanverbindung, der Vanadiumverbindung und dem Träger vereinigt werden. Als

Halogen werden insbesondere Chlor oder Brom verwendet, die vorzugsweise in Form ihrer Halogenwasserstoffsäuren oder in Form ihrer Siliciumverbindungen eingebracht werden.

Vorzugsweise enthält die Feststoffkomponente a) u.a. noch Verbindungen des Magnesiums. Als solche kommen neben Magnesiumhalogeniden, Magnesiumalkylen und Magnesiumarylen auch Magnesiumalkoxy- und Magnesiumaryloxyverbindungen in Betracht, wobei insbesondere Magnesiumdichlorid, Magnesiumdibromid und Magnesiumdi-($C_1$-$C_{10}$-alkyl)-Verbindungen verwendet werden.

Darüber hinaus empfiehlt sich die Mitverwendung einer Elektronendonorverbindung in der Feststoffkomponente a) der erfindungsgemäßen zweizentrigen Katalysatorsysteme. Geeignete Elektronendonorverbindungen sind beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der Feststoffkomponente a) Phthalsäurederivate der allgemeinen Formel I

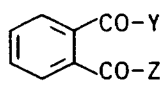

I

verwendet, wobei Y und Z für einen $C_1$- bis $C_{10}$-Alkoxyrest stehen. Besonders bevorzugte Elektronendonorverbindungen sind Phthalsäureester, wobei X und Y einen $C_1$-$C_8$-Alkoxyrest, beispielsweise einen Methoxy-, Ethoxy-, Propyloxy- oder einen Butyloxyrest bedeuten.

Weiter bevorzugte Elektronendonorverbindungen innerhalb der Feststoffkomponente a) sind u.a. Diester von 3- oder 4-gliedrigen, gegebenenfalls substituierten Cycloalkyl-1,2-dicarbonsäuren sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner Phenole, Naphthole sowie die $C_1$-$C_{10}$-Alkylderivate dieser Verbindungen.

Bevorzugte Benzophenoncarbonsäureester sind solche der Formel II

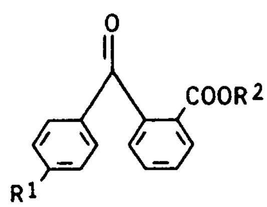

II

in der $R^1$ ein Wasserstoffatom, eine $C_1$-$C_5$-Alkylgruppe oder ein Halogenatom und $R^2$ eine $C_1$-$C_8$-Alkylgruppe darstellen. Bevorzugt ist $R^1$ Wasserstoff, Methyl oder Ethyl und $R^2$ Methyl, Ethyl, Butyl (n-, i- und t-Butyl) oder Hexyl.

Die Herstellung der in den erfindungsgemäßen, zweizentrigen Katalysatorsystemen vorliegenden Feststoffkomponente a) kann analog zu bereits aus dem Stand der Technik bekannten Methoden erfolgen. Beispiele für übliche Herstellungsmethoden sind u.a. in der EP-A 45 975, der EP-A 45 977, der EP-A 86 473, der EP-A 171 200, der GB-A 2 111 066 und der US-A 4 857 613 beschrieben.

Zur Herstellung der erfindungsgemäßen, zweizentrigen Katalysatorsysteme hat sich insbesondere das folgende zweistufige Verfahren besonders bewährt.

In der ersten Stufe versetzt man zunächst einen feinteiligen Träger, bevorzugt Siliciumoxid oder $SiO_2 \cdot aAl_2O_3$ - wobei a für eine Zahl im Bereich von 0,001 bis 2, insbesondere im Bereich von 0,01 bis 0,5 steht -, mit einem Halogen oder einem Halogenierungsmittel, insbesondere Chlor oder Chlorwasserstoff, einem $C_1$-$C_8$-Alkanol, insbesondere Ethanol, Isopropanol oder n-Butanol und einer Verbindung des drei-, vier- oder fünfwertigen Vanadiums, insbesondere Vanadiumtrichlorid, Vanadiumtetrachlorid, Vanadiumpentachlorid oder Vanadiumoxotrichlorid. Die einzelnen Bestandteile werden bei Temperaturen von 20 bis 100 °C durch mehrstündiges Rühren miteinander vereinigt. Der feinteilige Träger liegt dabei in Form einer Lösung, Suspension oder Aufschlämmung in einem inerten Lösungsmittel, vorzugsweise in einem inerten, flüssigen Kohlenwasserstoff vor. Nach einer speziellen Verfahrensvariante fügt man als weiteren Bestandteil dem Gemisch noch eine Magnesiumverbindung, insbesondere eine Magnesiumalkylverbindung hinzu. Die einzelnen Bestandteile des Gemisches werden nach diesem, ebenfalls erfindungsgemäßen Herstellungsverfahren

in solchen Mengenverhältnissen verwendet, daß pro Mol der drei-, vier- oder fünfwertigen Vanadiumverbindung 1 bis 100 mol des Halogens oder des Halogenierungsmittels, 0,1 bis 100 mol des $C_1$- bis $C_8$-Alkanols und 0,01 bis 10 mol der Magnesiumverbindung eingesetzt werden.

Anschließend wird in einer zweiten Herstellungsstufe das auf diese Weise erhaltene Produkt, welches üblicherweise vorher vom Lösungsmittel durch Filtration abgetrennt wurde, mit überschüssigem Titantetrachlorid oder einer im Überschuß vorliegenden, mindestens 5, vorzugsweise mindestens 10 vol-%igen Lösung von Titantetrachlorid in einem inerten Lösungsmittel, vorzugsweise einem Alkylbenzol, extrahiert. Dieser Extraktionsschritt wird dabei in der Regel für einen Zeitraum von 0,5 bis 10 Stunden bei Temperaturen von 50 bis 150 °C durchgeführt. Danach wird die Feststoffkomponente a) durch Filtration vom Extraktionsmittel abgetrennt und mit einem flüssigen Alkan üblicherweise so lange gewaschen, bis der Gehalt der Waschflüssigkeit an Titantetrachlorid geringer ist als 2 Gew.-%.

Nach einer weiteren, ebenfalls bevorzugten Herstellungsvariante fügt man dem aus der ersten Stufe erhaltenen Produkt vor dem Extraktionsschritt der zweiten Herstellungsstufe noch eine Verbindung des drei- oder vierwertigen Titans, insbesondere Titantetrachlorid und eine Elektronendonorverbindung, insbesondere ein Phthalsäurederivat der bereits beschriebenen allgemeinen Formel I hinzu. Vorzugsweise werden diese beiden Bestandteile in solchen Mengen eingesetzt, daß pro Mol der drei-, vier- oder fünfwertigen Vanadiumverbindung 0,1 bis 20 mol der zusätzlichen drei- oder vierwertigen Titanverbindung und 0,001 bis 1 Mol der Elektronendonorverbindung im Gemisch vorliegen.

Die auf diese Weise erhältliche titan- und vanadiumhaltige Feststoffkomponente a) wird zusammen mit Cokatalysatoren, d.h. Aluminiumkomponenten und Elektronendonorkomponenten, als zweizentriges Katalysatorsystem verwendet.

Als Aluminiumkomponente b) kommen neben Trialkylaluminium auch solche Verbindungen in Betracht, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Neben der Feststoffkomponente a) und der Aluminiumkomponente b) enthalten die erfindungsgemäßen Katalysatorsysteme ferner noch Elektronendonorkomponenten c) wie mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorkomponenten c) sind siliciumorganische Verbindungen der Formel II

$$R^3_nSi(OR^4)_{4-n} \quad (II)$$

wobei

$R^3$ eine $C_1$- bis $C_{20}$-Alkylgruppe, eine 5- bis 7-gliedrige Cycloalkylgruppe, die ihrerseits eine $C_1$- bis $C_8$-Alkylgruppe tragen kann, oder eine $C_6$- bis $C_{12}$-Aryl- oder Arylalkylgruppe, $R^4$ eine $C_1$- bis $C_{20}$-Alkylgruppe bedeutet und n für die Zahlen 1, 2 oder 3 steht. Besonders bevorzugt werden dabei solche Verbindungen, in denen $R^3$ eine $C_1$- bis $C_8$-Alkylgruppe oder eine 5- bis 7-gliedrige Cycloalkylgruppe, sowie $R^4$ eine $C_1$- bis $C_4$-Alkylgruppe bedeutet und n für die Zahlen 1 oder 2 steht.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan besonders geeignet.

Bevorzugt werden solche Katalysatorsysteme verwendet, bei denen das Atomverhältnis zwischen Aluminium aus der Aluminiumkomponente b) und Titan aus der titan- und vanadiumhaltigen Feststoffkomponente a) 10:1 bis 800:1, insbesondere 20:1 bis 200:1, und das Molverhältnis zwischen der Aluminiumkomponente b) und der Elektronendonorkomponente c) 1:1 bis 100:1, insbesondere 2:1 bis 80:1 beträgt.

Die erfindungsgemäßen zweizentrigen Katalysatorsysteme sind für die Herstellung von Polymerisaten des Propylens gut geeignet.

Die Herstellung von Polymerisaten des Propylens kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation, durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden. Die Reaktiondauer hängt entscheidend von den jeweils gewählten Polymerisationsbedingungen ab. Sie liegt üblicherweise zwischen 0,2 und 20 Stunden, meistens zwischen 0,5 und 10 Stunden.

Unter Polymerisaten des Propylens werden neben Homopolymerisaten des Propylens auch Copolymerisate des Propylens mit bis zu 50 Gew.-% anderer Alk-1-ene mit 2 bis 12 C-Atomen verstanden, z.B. von Ethylen, But-1-en, Pent-1-en, 4-Methylpent-1-en, Hex-1-en, Hept-1-en und Oct-1-en. Besonders geeignete

Comonomere sind Ethylen und But-1-en.

Das erfindungsgemäße Katalysatorsystem eignet sich insbesondere zur Herstellung von Propylenhomopolymerisaten, von statistisch, alternierend oder blockartig aufgebauten Propylen-Ethylen-Copolymerisaten mit bis zu 20 Gew.-% einpolymerisiertem Ethylen und von Terpolymerisaten des Propylens mit bis zu 20 Gew.-% einpolymerisierten Comonomeren.

Die Polymerisationsreaktion wird zweckmäßigerweise bei Temperaturen von 20 bis 150 °C und Drücken von 1 bis 100, vorzugsweise 10 bis 100 bar durchgeführt. Bevorzugt sind dabei Temperaturen von 40 bis 120 °C und Drücke von 10 bis 80, insbesondere 10 bis 40 bar. Die Molmasse der dabei gebildeten Polyolefine kann durch Zugabe von in der Polymerisationstechnik gebräuchlichen Reglern, beispielsweise von Wasserstoff kontrolliert werden. Weiterhin ist es möglich, inerte Lösungsmittel wie beispielsweise Toluol oder Hexan, Inertgase wie Stickstoff oder Argon und kleinere Mengen Polypropylenpulver mitzuverwenden.

Die mit Hilfe des erfindungsgemäßen Katalysatorsystems erhältlichen Polymerisate weisen im allgemeinen Schmelzflußindizes im Bereich von 0,1 bis 100 g/10 min, vorzugsweise im Bereich von 0,2 bis 50 g/10 min, jeweils gemessen nach DIN 53 735 bei 230 °C und 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230 °C und unter einem Gewicht von 2,16 kg ausgepreßt wird.

Die erfindungsgemäßen zweizentrigen Katalysatorsysteme sind insbesondere zur Herstellung von stereospezifischen Polymerisaten des Propylens mit breiter Molmassenverteilung ($\overline{M}_w/\overline{M}_n$) geeignet. Aufgrund dieser breiten Molmassenverteilung können diese Polymerisate ohne verfahrenstechnischen Mehraufwand leicht verarbeitet werden.

Aufgrund ihrer guten Verarbeitungseigenschaften eignen sich die mit dem erfindungsgemäßen Katalysatorsystem hergestellten Polymerisate des Propylens vor allem als Materialien für solche Folien und Formkörper, bei denen eine möglichst wirtschaftliche Verarbeitungsweise für deren gewerbliche Anwendbarkeit von entscheidender Bedeutung ist.

## Beispiele

### Beispiel 1

I. Herstellung der Feststoffkomponente a)

In 330 ml Tetrahydrofuran wurden zunächst 22 g (0,14 mol) Vanadiumtrichlorid suspendiert und danach bei 20 °C mit 34 g (0,566 mol) Isopropanol versetzt. Anschließend wurde die erhaltene Suspension 5 Stunden lang bei 60 °C gerührt, wobei sich beide Verbindungen vollständig lösten. Zu dieser Lösung fügte man 50 g (0,832 mol) Siliciumoxid hinzu, welches einen Teilchendurchmesser von 20 bis 45 µm, ein Porenvolumen von 1,75 $cm^3$/g, eine Oberfläche von 310 $m^2$/g und einen Wassergehalt von weniger als 1 Gew.-% aufwies und rührte dieses Gemisch 15 Minuten bei 60 °C. Nach Abdestillation des Tetrahydrofurans am Rotationsverdampfers erhielt man ein rosafarbenes, gut rieselndes Pulver. Dieses Pulver wurde anschließend in 200 ml (1,74 mol) Siliciumtetrachlorid suspendiert und insgesamt 10 Stunden bei 55 °C gerührt. Das aus dieser Lösung durch Filtration erhaltene Produkt wurde insgesamt fünfmal mit je 100 ml Heptan gewaschen und anschließend in 200 ml Heptan suspendiert. In diese Suspension wurden nacheinander 4,0 ml (0,015 mol) Phthalsäuredibutylester und 200 ml Titantetrachlorid eingebracht und 2 Stunden lang bei 100 °C gerührt.

Danach wurde das durch Filtration aus dieser Lösung erhaltene Produkt in eine soxhletartige Extraktionsfritte überführt und dreimal mit je 100 ml Ethylbenzol gewaschen. Anschließend wurde das gereinigte Produkt bei 125 °C einer dreistündigen Extraktion mit einer 10 vol-%igen Mischung aus Titantetrachlorid in Ethylbenzol unterworfen. Der auf diese Weise erhaltene Katalysator wurde danach abfiltriert und solange mit n-Heptan gewaschen, bis in der Waschlösung kein Chlorid mehr nachgewiesen werden konnte.

II. Polymerisation

In einem mit einem Rührer versehenen 2 l Stahlautoklaven, der 20 g Polypropylen (Schmelzflußindex 8 g/10 min, bei 230 °C und 2,16 kg, nach DIN 53 735) enthielt, wurden bei 30 °C 0,042 g der Feststoffkomponente a), $3 \cdot 10^{-3}$ mol Triethylaluminium und $3 \cdot 10^{-4}$ mol Dimethoxyisobutylisopropylsilan, beides als jeweils 1 molare Lösung in n-Heptan, eingebracht. Anschließend wurde dort in Anwesenheit von 0,3 Vol-% Wasserstoff im Gasraum unter Rühren bei einer Temperatur von 70 °C und einem Druck von 27 bar zwei Stunden lang Propylen polymerisiert.

Die Produktivität des Katalysatorsystems, die Isotaktizität des dabei erhaltenen Polypropylens (xylolunlöslicher Anteil), sowie dessen Schmelzflußindex und dessen Molmassenverteilung ($\overline{M}_w/\overline{M}_n$) können der nachfolgenden Tabelle entnommen werden.

Beispiel 2

I. Herstellung der Feststoffkomponente a)

In 250 ml absolutiertem n-Heptan wurden zunächst 21,3 g (0,35 mol) Siliciumoxid eingebracht, welches einen Teilchendurchmesser von 20 bis 45 µm, ein Porenvolumen von 1,75 $cm^3$/g, eine Oberfläche von 320 $m^2$/g und einen Wassergehalt von weniger als 5 Gew.-% aufwies und danach mit 101,27 ml (0,089 mol) n-Butyl-n-Octyl-Magnesium versetzt. Nachdem die Mischung eine Stunde am Rückfluß gehalten wurde, ließ man sie abkühlen, blubberte anschließend 20 l Chlorwasserstoff durch die Suspension. Zu der auf diese Weise erhaltenen Suspension wurden 12,27 g (0,27 mol) Ethanol hinzugefügt und anschließend wurde die Lösung erneut eine Stunde am Rückfluß gehalten. Nach Abkühlen auf 20°C wurden darin 107,7 g (0,62 mol) Vanadiumoxotrichlorid eingebracht und erneut zwei Stunden am Rückfluß erhitzt. Das daraus durch Filtration erhaltene Produkt wurde zweimal mit ca. 100 ml n-Heptan gewaschen und dann bei 20°C 1,5 Stunden im Stickstoffstrom getrocknet.

In der zweiten Herstellungsstufe wurde das aus der ersten Stufe erhaltene Produkt 4 Stunden lang mit einer 11 vol-%igen Lösung von 50 ml Titantetrachlorid in 450 ml Ethylbenzol extrahiert und 3 mal mit n-Heptan gewaschen, bis in der Waschflüssigkeit kein Chlorid mehr nachgewiesen werden konnte.

II. Polymerisation

In einem mit einem Rührer versehenen 10 l-Stahlautoklaven, der 50 g Polypropylen (Schmelzflußindex 8 g/10 min, bei 230°C und 2,16 kg, nach DIN 53 735) enthielt, wurden bei 30°C 783 mg der Feststoffkomponente a), 0,01 mol Triethylaluminium und 0,001 mol Dimethoxyisobutylisopropylsilan, beides als 1molare Lösung in n-Heptan, eingebracht. Anschließend wurde dort in Anwesenheit von 10 l Wasserstoff unter Rühren bei einer Temperatur von 70°C und einem Druck von 28 bar zwei Stunden lang Propylen polymerisiert.

Die Produktivität des Katalysatorsystems, die Isotaktizität des dabei erhaltenen Polypropylens (xylolunlöslicher Anteil), sowie dessen Schmelzflußindex und dessen Molmassenverteilung ($\overline{M}_w/\overline{M}_n$) können der nachfolgenden Tabelle entnommen werden.

Tabelle

| | Beispiel | |
|---|---|---|
| | 1 | 2 |
| Produktivität (g Polypropylen/g Feststoffkomponente a) | 3000 | 960 |
| Stereospezifität (xylolunlöslicher Anteil) [Gew.-%] | 93,3 | 92,5 |
| Schmelzflußindex [g/l 10 min] | 0,3[a)] | 667[b)] |
| Molmassenverteilung ($\overline{M}_w$ / $\overline{M}_n$) | 11,7 | 10,2 |

[a)] bei 230°C und 2,16 kg, nach DIN 53 735
[b)] bei 230°C und 21,6 kg, nach DIN 53 735

## Patentansprüche

**1.** Zweizentrige Katalysatorsysteme zur Polymerisation von Propylen auf der Basis
   a) einer Feststoffkomponente, enthaltend eine Verbindung des drei- oder vierwertigen Titans und eine Verbindung des drei-, vier- oder fünfwertigen Vanadiums, einen feinteiligen Träger und ein Halogen,
   b) einer Aluminiumkomponente und
   c) einer Elektronendonorkomponente.

**2.** Zweizentrige Katalysatorsysteme nach Anspruch 1, enthaltend in der Feststoffkomponente a) als weiteren Bestandteil eine Magnesiumverbindung.

**3.** Zweizentrige Katalysatorsysteme nach den Ansprüchen 1 oder 2, enthaltend in der Feststoffkomponente a) als weiteren Bestandteil eine Elektronendonorverbindung.

**4.** Zweizentrige Katalysatorsysteme nach den Ansprüchen 1 bis 3, enthaltend in der Feststoffkomponente a) als Elektronendonorverbindung ein Phthalsäurederivat der allgemeinen Formel I

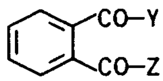

I,

in der Y und Z jeweils für einen $C_1$- bis $C_{10}$-Alkoxyrest stehen oder einen Ester einer Benzophenoncarbonsäure der Formel II

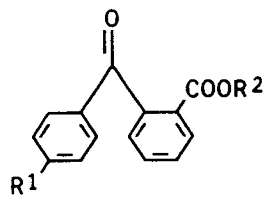

II

wobei $R^1$ ein Wasserstoffatom, eine $C_1$-$C_5$-Alkylgruppe oder ein Halogenatom und $R^2$ eine $C_1$-$C_8$-Alkylgruppe darstellt, stehen.

**5.** Zweizentrige Katalysatorsysteme nach den Ansprüchen 1 bis 4, enthaltend als Aluminiumkomponente b) eine Trialkylaluminiumverbindung, deren Substituenten jeweils 1 bis 8 C-Atome aufweisen.

**6.** Zweizentrige Katalysatorsysteme nach den Ansprüchen 1 bis 5, enthaltend als Elektronendonorkomponente c) eine Siliciumverbindung der allgemeinen Formel II

$R^3_nSi(OR^4)_{4-n}$ II,

wobei $R^3$ eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^4$ gleich oder verschieden zu $R^3$ ist und eine $C_1$- bis $C_{20}$-Alkylgruppe bezeichnet und n für die Zahlen 1, 2 oder 3 steht.

**7.** Verfahren zur Herstellung von zweizentrigen Katalysatorsystemen gemäß den Ansprüchen 1 bis 6, dadurch gekennzeichnet, daß man zunächst

in einem ersten Schritt einen feinteiligen Träger in einem inerten Lösungsmittel mit einem Halogen oder einem Halogenierungsmittel, einem $C_1$- bis $C_8$-Alkanol und einer Verbindung des drei-, vier- oder fünfwertigen Vanadiums unter Rühren vereinigt, wobei pro Mol der drei-, vier- oder fünfwertigen Vanadiumverbindung 1 bis 100 mol des Halogens oder des Halogenierungsmittels und 0,1 bis 10 mol des $C_1$- bis $C_8$-Alkanols verwendet werden,
anschließend in einem zweiten Schritt das auf diese Weise erhaltene Produkt mit überschüssigem Titantetrachlorid oder einer im Überschuß vorliegenden Lösung von Titantetrachlorid in einem inerten Lösungsmittel extrahiert, anschließend filtriert und mehrmals mit einem flüssigen Alkan wäscht
und auf diese Weise erhältliche Feststoffkomponente a) danach mit der Aluminiumkomponente b) und der Elektronendonorkomponente c) vereinigt.

**8.** Verfahren zur Herstellung von zweizentrigen Katalysatorsystemen nach Anspruch 7, dadurch gekennzeichnet, daß man im ersten Schritt den feinteiligen Träger zusätzlich mit einer Magnesiumverbindung

vereinigt, wobei pro Mol der drei-, vier- oder fünfwertigen Vanadiumverbindung 0,01 bis 10 mol der Magnesiumverbindung verwendet werden.

**9.** Verfahren zur Herstellung von zweizentrigen Katalysatorsystemen nach den Ansprüchen 7 oder 8, dadurch gekennzeichnet, daß man dem aus dem ersten Schritt erhaltenen Produkt vor dem zweiten Schritt eine Verbindung des drei- oder vierwertigen Titans und eine Elektronendonorverbindung hinzufügt, wobei pro Mol der drei-, vier- oder fünfwertigen Vanadiumverbindung 0,1 bis 20 mol der drei- oder vierwertigen Titanverbindung und 0,001 bis 1 Mol der Elektronendonorverbindung verwendet werden.

**10.** Verfahren zur Herstellung von Polymerisaten des Propylens durch Polymerisation bei Temperaturen von 20 bis 150°C und Drücken von 1 bis 100 bar, dadurch gekennzeichnet, daß man hierzu Katalysatorsysteme gemäß den Ansprüchen 1 bis 6 verwendet.

**11.** Polymerisate des Propylens, erhältlich nach dem Verfahren gemäß Anspruch 10.

Europäisches Patentamt

# EUROPÄISCHER RECHERCHENBERICHT

Nummer der Anmeldung

EP 92114802.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| P,X | EP - A - 0 447 904 (BASF AKTIENGESELLSCHAFT) * Ansprüche 1-6 * | 1,3,7, 9 | C 08 F 4/685<br>C 08 F 4/647<br>C 08 F 10/06 |
| A | EP - A - 0 427 080 (BASF AKTIENGESELLSCHAFT) * Ansprüche 1-9; Beispiele * | 1-11 | |
| A | EP - A - 0 362 743 (BASF AKTIENGESELLSCHAFT) * Ansprüche; Beispiel * | 1,3,6-11 | |
| A | DE - A - 3 830 195 (BASF AG) * Ansprüche; Beispiel * | 1-11 | |
| A | EP - A - 0 108 964 (BASF AKTIENGESELLSCHAFT) * Anspruch; Beispiele * | 1,5,7, 9,10 | |
| A | EP - A - 0 158 018 (BASF AKTIENGESELLSCHAFT) * Anspruch; Beispiele * | 1,5,7, 9,10 | **RECHERCHIERTE SACHGEBIETE (Int Cl 5)**<br>C 08 F 4/00<br>C 08 F 10/00<br>C 08 F 110/00<br>C 08 F 210/00 |

Der vorliegende Recherchenbericht wurde für alle Patentansprüche erstellt.

| Recherchenort | Abschlußdatum der Recherche | Prüfer |
|---|---|---|
| WIEN | 03-12-1992 | PUSTERER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument